# EUROPÄISCHE PATENTSCHRIFT

(11) **EP 3 349 931 B1**
(45) Veröffentlichungstag und Bekanntmachung des Hinweises auf die Patenterteilung: **12.07.2023**
(21) Anmeldenummer: 16787364.5
(22) Anmeldetag: 17.10.2016
(51) Int. Cl.: B23B 31/30

(54) **SPANNEINRICHTUNG ZUM FIXIEREN EINES WERKZEUGS IN EINER WERKZEUGMASCHINE, SOWIE VERFAHREN ZUR HERSTELLUNG DER SPANNEINRICHTUNG**
CLAMPING DEVICE FOR FIXING A TOOL IN A MACHINE TOOL AND METHOD FOR MANUFACTURING THE CLAMPING DEVICE
DISPOSITIF DE SERRAGE SERVANT À FIXER UN OUTIL DANS UNE MACHINE-OUTIL ET PROCÉDÉ DE DE PRODUCTION DUDIT DISPOSITIF DE SERRAGE

(30) Priorität: 15.10.2015 DE 102015117590
(43) Veröffentlichungstag der Anmeldung: 25.07.2018
(73) Patentinhaber: Schunk GmbH & Co. KG Spann- und Greiftechnik, 74348 Lauffen (DE)
(72) Erfinder: RETZBACH, Thomas, 74357 Bönnigheim (DE); CANTZ, Nico, 74394 Hessigheim (DE)
(74) Vertreter: Paul & Albrecht Patentanwälte PartG mbB
(86) Internationale Anmeldenummer: PCT/EP2016/074911
(87) Internationale Veröffentlichungsnummer: WO 2017/064332

(56) Entgegenhaltungen:
- EP-A1- 2 716 391
- WO-A1-00/58045
- WO-A2-01/45883
- DE-A1- 10 007 074
- DE-A1- 10 340 052
- DE-A1-102006 013 662
- JP-U- H0 663 207
- Stock: "Chip - by Chip - to the Top Tool Holders", , 31. Dezember 2014 (2014-12-31), XP055332134, Berlin, Germany Gefunden im Internet: URL:http://www.stock.de/pdf/Stock_Tool Holders_2014.pdf [gefunden am 2017-01-04]

## Beschreibung

Die vorliegende Erfindung betrifft eine Spanneinrichtung zum Fixieren eines Werkzeugs in einer Werkzeugmaschine, mit einem eine Spannachse definierenden Grundkörper, der eine Maschinenschnittstelle, die einen Befestigungskonus und einen Ringflansch aufweist und in dem hinteren axialen Endbereich des Grundkörpers ausgebildet ist, und einen Spannbereich, der eine Aufnahme für einen Werkzeugschaft definiert und in dem der Maschinenschnittstelle gegenüber liegenden vorderen axialen Endbereich des Grundkörpers ausgebildet ist, umfasst, wobei der Grundkörper eine Außenkontur besitzt, die entsprechend einem Warmschrumpffutter und nach DIN 69882-2 normiert ausgebildet sind. Eine derartige Spanneinrichtung gemäß dem Oberbegriff des unabhängigen Anspruchs 1 ist aus dem Dokument "Chip - by Chip - to the Top. Tool Holders" von R.Stock AG, Berlin (DE), 2014, (148 831/144-III-25), XP055332134 bekannt (siehe Seite 17). Die Erfindung betrifft auch ein Verfahren zum Herstellen einer derartigen Spanneinrichtung.

Derartige Spanneinrichtungen zum Fixieren eines Werkzeugs in einer Werkzeugmaschine sind im Stand der Technik in unterschiedlichen Ausgestaltungen bekannt und dienen dazu, ein Werkzeug wie beispielsweise ein Fräs- oder Bohrwerkzeug zur spanenden Bearbeitung eines Werkstücks an einer Arbeitsspindel einer Werkzeugmaschine zu fixieren. Eine solche Spanneinrichtung umfasst üblicherweise einen Grundkörper, der eine Spannachse definiert und in einem hinteren axialen Endbereich eine Maschinenschnittstelle aufweist, mittels derer die Spanneinrichtung formschlüssig mit der Arbeitsspindel der Werkzeugmaschine verbindbar ist. An seinem der Maschinenschnittstelle gegenüber liegenden vorderen axialen Endbereich definiert der Grundkörper weiterhin einen Spannbereich, von dem das Werkzeug kraftschlüssig gehalten ist.

Zum Einspannen der Werkzeuge sind verschiedenartige Spannmechanismen bekannt und erfreuen sich weiter Verbreitung. So offenbaren die EP 2716391 A1, die WO 01/45883 A2 und die DE 10 2006 013 662 A1 Spanneinrichtungen der eingangs genannten Art mit verschiedenartigen Spannmechanismen.

Spanneinrichtungen sind zum Teil als sogenannte Warmschrumpffutter ausgebildet. Diese umfassen eine mit der Spannachse koaxiale Aufnahmebohrung, deren Innendurchmesser bei gewöhnlich vorherrschenden Temperaturen geringfügig kleiner ist als der Außendurchmesser des aufzunehmenden Werkzeugschafts. Zum Spannen des Werkzeugs wird das Warmschrumpffutter beispielsweise durch einen Induktionsstrom erwärmt, wodurch es sich auch in radialer Richtung ausdehnt. Wenn sein Innendurchmesser geringfügig größer ist als der Außendurchmesser des aufzunehmenden Werkzeugschafts, wird der Werkzeugschaft in die Aufnahmebohrung eingeführt und die Erwärmung des Spannbereichs beendet. Während des Abkühlens verringert sich der Innendurchmesser der Aufnahmebohrung derart, dass sich zwischen dem Spannbereich und dem Werkzeugschaft eine kraftschlüssige Verbindung ergibt. Typischerweise besitzen Warmschrumpffutter eine hohe Rundlaufgenauigkeit, was mit präzisen Bearbeitungsergebnissen einhergeht.

Während des Betriebs der Werkzeugmaschine wird das in der Spanneinrichtung fixierte Werkzeug von der Werkzeugmaschine rotierend angetrieben und zur spanenden Bearbeitung des Werkstücks entlang der Außenfläche des Werkstücks geführt. Um einen Materialabtrag an dem Werkstück zu bewirken, beaufschlagt das rotierende Werkzeug das Werkstück mit einer Kraft. Die entsprechende Gegenkraft muss von der Arbeitsspindel der Werkzeugmaschine aufgenommen werden, die eines der teuersten Bauteile der Werkzeugmaschine darstellt.

Um eine automatische Bearbeitung des Werkstücks zu gewährleisten, bieten bekannte moderne Werkzeugmaschinen dem Anwender die Möglichkeit, die Rotation des Werkzeugs und die relativen Bewegungen des Werkzeugs sowie des zu bearbeitenden Werkstücks zu programmieren (CNC-Programmierung). Entsprechende CNC-Programme definieren daher eine Abfolge von Bearbeitungsvorgängen und/oder Relativbewegungen.

Bei jedem Bearbeitungsvorgang und jeder Relativbewegung muss auch die Außenkontur des Grundkörpers der Spaneinrichtung berücksichtigt werden, um eine Kollision des Grundkörpers mit dem Werkstück zu vermeiden. Daher sind nach der Erstellung oder einer Änderung eines CNC-Programms regelmäßig Kollisionsuntersuchungen erforderlich, wodurch sich die Programmierung der Werkzeugmaschine aufwändig gestaltet.

Weiterhin kann die spanende Bearbeitung eines Werkstücks einen oder mehrere Werkzeugwechsel erforderlich machen. Bei entsprechend ausgebildeten Werkzeugmaschinen können daher auch Werkzeugwechsel im Rahmen der CNC-Programmierung automatisiert werden, was allerdings eine geeignete Spanneinrichtung voraussetzt und die Komplexität des CNC-Programms weiter erhöht.

Infolge der weit verbreiteten und langjährigen Verwendung von Spanneinrichtungen mit Warmschrumpffutttern existiert inzwischen eine große Anzahl auf derartigen Spanneinrichtungen beruhender CNC-Programme, um unterschiedliche Werkstücke automatisch spanend zu bearbeiten.

Die DIN 69882-8 normiert dabei die Außenkontur des Spannbereichs von Warmschrumpffuttern. Die Maschinenschnittstelle kann normgemäß beispielsweise nach DIN 69893-1 als Hohlschachtkegel (HSK) ausgebildet sein, allerdings auch eine andere Außenkontur aufweisen, beispielsweise einen Steilkegel (SK). Die verschiedenen Ausführungen der Maschinenschnittstelle sind mit einer Außenkontur nach DIN 69882-8 eines Warmschrumpffutters kombinierbar. Die normierte Ausgestaltung sowohl des Spannbereichs, als auch der Maschinenschnittstelle ermöglicht einen effizienten Werkzeugwechsel ohne das Erfordernis, die CNC-Programme im Hinblick auf die Kollisionsüberwachung an veränderte Außenkonturen anpassen zu müssen. Allerdings weisen Warmschrumpffutter auch Nachteile auf. So kann es im Laufe mehrerer Ausdehn- und Schrumpfvorgänge und/oder wegen der wiederholten thermischen Einwirkung zu unerwünschten und irreversiblen Verformungen des Spannbereichs derart kommen, dass die Rundlaufgenauigkeit allmählich abnimmt. Ein weiterer Nachteil von Warmschrumpffuttern liegt darin, dass sie eine extrem starre Verbindung mit dem Werkzeug herstellen, weshalb Vibrationen, die bei der spanenden Bearbeitung des Werkstücks zwangsläufig entstehen, ungedämpft auf die Maschinenspindel einwirken. Diese kann dadurch leicht Schaden nehmen, was eine kostenintensive Reparatur der Werkzeugmaschine erforderlich macht. Ein weiterer Nachteil von Warmschrumpffuttern besteht darin, dass die für einen Werkzeugwechsel erforderliche Rüstzeit infolge des relativ langen Abkühlungszeitraums bis zu zehn Minuten betragen kann, wodurch die Fertigstellung des Werkstücks erheblich verzögert wird.

Ausgehend von diesem Stand der Technik ist es eine Aufgabe der vorliegenden Erfindung, eine alternative Spanneinrichtung zu schaffen, die kürzere Rüstzeiten für einen Werkzeugwechsel ermöglicht, bessere Dämpfungseigenschaften besitzt und ohne Weiteres die Weiterverwendung bestehender CNC-Programme gestattet, sowie ein Verfahren zum Herstellen einer derartigen Spanneinrichtung zu schaffen.

Diese Aufgabe wird erfindungsgemäß bei einer Spanneinrichtung der eingangs genannten Art dadurch gelöst, dass die Aufnahme von einer mit einem Hydraulikmittel beaufschlagbaren Druckkammer ringförmig umgeben ist, wobei zwischen der Aufnahme und der Druckkammer eine dünne Wandung vorgesehen ist, die durch eine Druckerhöhung des Drucks in der Drucckammer elastisch nach innen verformbar ist, um einen in die Aufnahme eingesetzten Werkzeugschaft kraftschlüssig zu fixieren, oder dass die Aufnahme von mehreren hydraulisch beaufschlagbaren Druckkammern umgeben ist, die gleichmäßig verteilt entlang des Umfangs der Aufnahme angeordnet und insbesondere konzentrisch zur Spannachse ausgebildet sind, wobei zwischen den Druckkammern und der Aufnahme dünne Wandungsabschnitte verbleiben, die durch eine Erhöhung des Drucks in den Druckkammern elastisch nach innen verformbar sind, um einen in die Aufnahme eingesetzten Werkzeugschaft kraftschlüssig zu fixieren.

Der Erfindung liegt somit die Überlegung zugrunde, die Spanneinrichtung als Hydro-Dehnspannfutter auszubilden, dabei jedoch den Grundkörper mit der Außenkontur eines Warmschrumpffutters zu versehen. Hydro-Dehnspannfutter besitzen eine sehr gute Rundlaufgenauigkeit, erlauben aber im Unterschied zu Warmschrumpffuttern kurze Rüstzeiten bei einem Werkzeugwechsel. Da eine erfindungsgemäße Spanneinrichtung hinsichtlich ihrer Außenkontur einem Warmschrumpffutter entsprechen, können überdies existierende, auf dem Warmschrumpffutter basierende CNC-Programme unverändert weiterverwendet werden. Insbesondere müssen bereits durchgeführte Kollisionsuntersuchungen bei Verwendung einer erfindungsgemäßen Spanneinrichtung nicht wiederholt werden.

Dabei kann in an sich bekannter Weise die Aufnahme von einer mit einem Hydraulikmittel beaufschlagbaren Druckkammer ringförmig umgeben sein, wobei zwischen der Aufnahme und der Druckkammer eine dünne Wandung vorgesehen ist, die durch eine Erhöhung des Drucks in der Druckkammer nach innen elastisch verformbar ist.

Alternativ ist es möglich, um die Aufnahme verteilt mehrere hydraulisch beaufschlagbare Druckkammern vorzusehen, über welche die die Aufnahme definierende Wandung nur lokal in den Umfangsbereichen, über welche sich die Druckkammern erstrecken, verformt wird. Hierdurch wird die Möglichkeit geschaffen, ein zu spannendes Bauteil auch nur lokal zu belasten, wenn dies gewünscht ist. Dabei sind die einzelnen Druckkammern bevorzugt über Verbindungskanäle miteinander verbunden, so dass sie gemeinsam druckbeaufschlagt werden können. Beispielsweise können drei Druckkammern mit einem Winkelversatz von 120° in Umfangsrichtung vorgesehen sein. Diese erstrecken sich dann zweckmäßigerweise jeweils über einen Umfangsbereich von 30° bis 60°, insbesondere von etwa 50°.

Vorteilhaft können in dem Ringflansch der Maschinenschnittstelle Spannmittel vorgesehen sein, die ausgebildet sind, um bei Betätigung ein Hydraulikmittel in die Druckkammer/die Druckkammern zu pressen und so eine Druckerhöhung in der Druckkammer/den Druckkammern zu bewirken, wobei bevorzugt das Spannmittel über einen Hydraulikmittelzuführkanal mit der Druckkammer wirkverbunden ist.

Bevorzugt umfassen die Spannmittel eine Spannschraube, die ausgebildet ist, um das Hydraulikmittel mit einer Kraft zu beaufschlagen und so Hydraulikmittel in die Druckkammern/die Druckkammern zu pressen. Eine Spannschraube stellt ein einfach herzustellendes und handzuhabendes Spannmittel dar, welches mit einem Betätigungsschlüssel betätigbar ist.

Die Betätigungsrichtung der Spannschraube kann sich quer zu der Spannachse erstrecken. Dann ist die Spannschraube durch eine äußere Umfangsfläche des Ringflansches gut zugänglich. Eine solche Anordnung der Spannschraube geht mit einer besonders einfachen Handhabbarkeit der Spanneinrichtung einher.

Gemäß einer Weiterentwicklung umfasst der Grundkörper wenigstens zwei axial benachbarte und miteinander verbundene Grundkörperabschnitte, von denen ein hinterer Grundkörperabschnitt die Maschinenschnittstelle und ein vorderer Grundkörperabschnitt wenigstens einen Teil des Spannbereichs definiert. Dies erlaubt beispielsweise die Verwendung unterschiedlicher Materialien für die Grundkörperabschnitte und kann die Herstellung vereinfachen.

Gemäß einer Ausführungsform der Erfindung ist eine die dünne Wandung/die dünnen Wandungsabschnitte definierende Dehnbüchse an dem hinteren Grundkörperabschnitt ausgebildet, insbesondere mittels eines additiven Herstellungsverfahrens angeformt und ragt von diesem nach vorne ab, wobei die Dehnbüchse den vorderen Grundkörperabschnitt unter Bildung der Druckkammern/der Druckkammern durchsetzt.

Alternativ umfasst der Spannbereich eine die dünne Wandung/die dünnen Wandungsabschnitte definierende Dehnbüchse, deren hinterer Endabschnitt in den hinteren Grundkörperabschnitt eingesetzt und mit diesem verbunden ist und deren vorderer Endabschnitt von dem hinteren Grundkörperabschnitt nach vorne abragt, wobei die Dehnbüchse den vorderen Grundkörperabschnitt unter Bildung der Druckkammer/der Druckkammer durchsetzt. Eine separate Dehnbüchse bietet den Vorteil, dass sie aus einem anderen Material als der Grundkörper hergestellt und einfach bearbeitet werden kann.

Die Dehnbüchse kann dabei mit dem hinteren Grundkörperabschnitt durch Löten und/oder Schweißen, insbesondere durch Hochtemperaturlöten verbunden sein, wobei der hintere Endabschnitt der Dehnbüchse bevorzugt zusätzlich in den vorderen Grundkörperabschnitt eingeschraubt ist.

Die Grundkörperabschnitte können mittels Löten und/oder Schweißen, insbesondere durch Hochtemperaturlöten direkt miteinander verbunden sein, wobei der vordere Grundkörperabschnitt vorzugsweise zusätzlich auf den hinteren Grundkörperabschnitt aufgeschraubt ist.

Alternativ kann die Dehnbüchse einen radial nach außen vorstehenden Ringflansch aufweisen, der axial zwischen den beiden Grundkörperabschnitten positioniert ist, wobei die Grundkörperabschnitte mit der Dehnbüchse im Bereich des Ringflansches mittels Löten und/oder Schweißen, insbesondere durch Hochtemperaturlöten verbunden sind. In diesem Fall bildet der Ringflansch einen Abstandhalter zwischen den beiden Grundkörperabschnitten, über welchen die Länge der Spanneinrichtung eingestellt werden kann. Diese Ausgestaltung ist entsprechend besonders für lange Versionen der erfindungsgemäßen Spanneinrichtung geeignet.

In weiterer Ausgestaltung dieser Ausführungsform kann vorgesehen sein, dass zwischen einander gegenüberliegenden Stirnflächen des hinteren Grundkörperabschnitts und des Ringflansches einerseits und des Ringflansches und des vorderen Grundkörperabschnitts andererseits ringförmige Fluidkammern gebildet werden, die miteinander über Verbindungsbohrungen in dem Ringflansch in Fluidverbindung stehen, und dass die zwischen dem vorderen Grundkörperabschnitt und dem Ringflansch gebildete vordere ringförmige Fluidkammer mit der Druckkammer/den Druckkammern fluidverbunden ist.

Erfindungsgemäß ist es gemäß Anspruch 14 auch möglich, den Grundkörper mit der Druckkammer/den Druckkammern einteilig durch ein generatives Herstellungsverfahren zu fertigen. Ebenso ist es möglich eine die dünne Wandung/die dünnen Wandungsabschnitte definierende Dehnbüchse vorzusehen, die in den Grundkörper von dessen Vorderseite her axial eingesetzt und mit diesem verbunden ist, wie dies an sich bekannt ist. Dabei kann die Dehnbüchse mit dem Grundkörper verlötet, insbesondere durch Hochtemperaturlöten verbunden sein.

Vorteilhaft besteht der Grundkörper aus einer Stahllegierung, insbesondere einem Einsatzstahl. Ein Einsatzstahl wie beispielsweise die Legierung 16MnCrS5 eignet sich für Bauteile, die eine hohe Kernfestigkeit erfordern und vorwiegend auf Verschleiß beansprücht sind.

Vorteilhaft weist der Grundkörper eine Innenkontur auf, die ausgebildet ist, um dem Werkzeug ein Schmiermittel zur Minimalmengenschmierung (MNS) zuzuführen. Eine Minimalmengenschmierung kann sowohl das Werkzeug schonen und dessen Standzeit verlängern als auch das Bearbeitungsergebnis verbessern.

Vorteilhaft ist die Innenkontur des Grundkörpers normiert. Dies gewährleistet ohne Weiteres die Verwendbarkeit der Spanneinrichtung mit entsprechend normierten Schmiermittelzuführeinrichtungen der Werkzeugmaschine.

Dabei kann die Innenkontur des Grundkörpers nach DIN 69090 ausgebildet sein. Diese Innenkontur ist bei Spanneinrichtungen weit verbreitet und passt zu einer Vielzahl mit entsprechenden Schmiermittelzuführeinrichtungen versehener Werkzeugmaschinen.

Alternativ kann die Innenkontur des Grundkörpers auch nach einer Werknorm ausgebildet sein. Dies erlaubt eine Minimalmengenschmierung auch bei Verwendung der erfindungsgemäßen Spanneinrichtung in Werkzeugmaschinen, die gemäß einer Werknorm ausgebildet sind.

Gemäß einer Weiterentwicklung können in dem Spannbereich Kühlschmiermittelkanäle ausgebildet sein, die sich ausgehend von einer in dem Grundkörper vorgesehenen Kühlschmiermittelzuleitung zu einem Kühlschmiermittelsammelraum erstrecken, der die Aufnahme an deren vorderem axialen Ende ringförmig umgibt, wobei der Kühlschmiermittelsammelraum mit mehreren Kühlschmiermitteldüsen fluidverbunden ist, die in der Stirnfläche kreisförmig um die Aufnahme herum angeordnet und derart ausgebildet sind, dass ein in die Aufnahme eingesetztes Werkzeug umfänglich mit einem Kühlschmiermittel bestrahlt werden kann. Dadurch wird eine Kühlschmierung auch solcher Werkzeuge ermöglicht, die nicht eigens für Kühlschmierung ausgelegt sind, insbesondere keine MMS-Kanäle aufweisen.

Weitere Merkmale und Vorteile der vorliegenden Erfindung werden anhand der nachfolgenden Beschreibung von vier Ausführungsformen der erfindungsgemäßen Spanneinrichtung unter Bezugnahme auf die beiliegende Zeichnung deutlich. Darin ist
- Figur 1: eine Längschnittansicht einer Spanneinrichtung gemäß einer ersten Ausführungsform der vorliegenden Erfindung;
- Figur 2: eine Querschnittsansicht der in Figur 1 dargestellten Spanneinrichtung entlang der mit dem Bezugszeichen II-II versehenen Linie;
- Figur 3: eine Längsschnittansicht einer Spanneinrichtung gemäß einer zweiten Ausführungsform der vorliegenden Erfindung;
- Figur 4: eine Längsschnittansicht einer Spanneinrichtung gemäß einer dritten Ausführungsform der vorliegenden Erfindung;
- Figur 5: eine perspektivische Ansicht der in Figur 4 dargestellten Spanneinrichtung;
- Figur 6: eine teilweise geschnittene Ansicht der in Figur 5 dargestellten Spanneinrichtung;
- Figur 7: eine Längsschnittansicht einer Spanneinrichtung gemäß einer vierten Ausführungsform der vorliegenden Erfindung;
- Figur 8: eine Längsschnittansicht der in Figur 7 dargestellten Spanneinrichtung;
- Figur 9: eine Vorderansicht der in Figur 7 dargestellten Spanneinrichtung;
- Figur 10: eine Längsschnittansicht einer Variante der in Figur 3 dargestellten Spanneinrichtung;
- Figur 11: eine Längsschnittansicht einer Spanneinrichtung gemäß einer fünften Ausführungsform der vorliegenden Erfindung, die ein Beispiel für eine lange Bauweise zeigt; und
- Figur 12: eine Querschnittsansicht einer Spanneinrichtung mit mehreren Druckkammern.

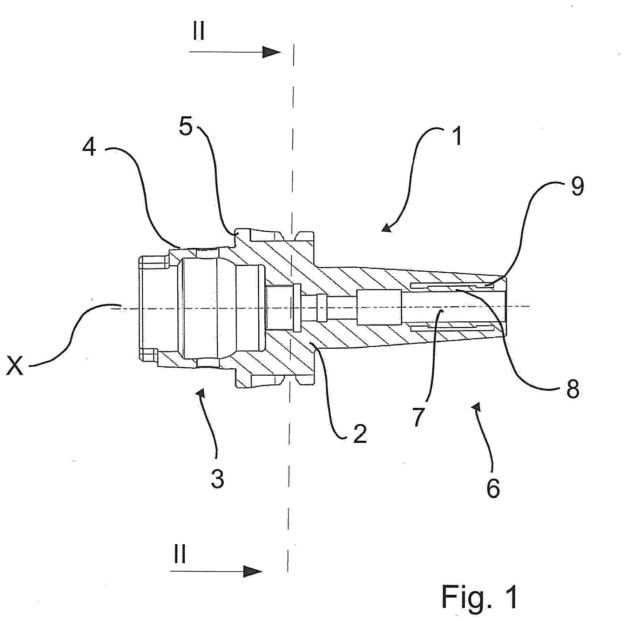

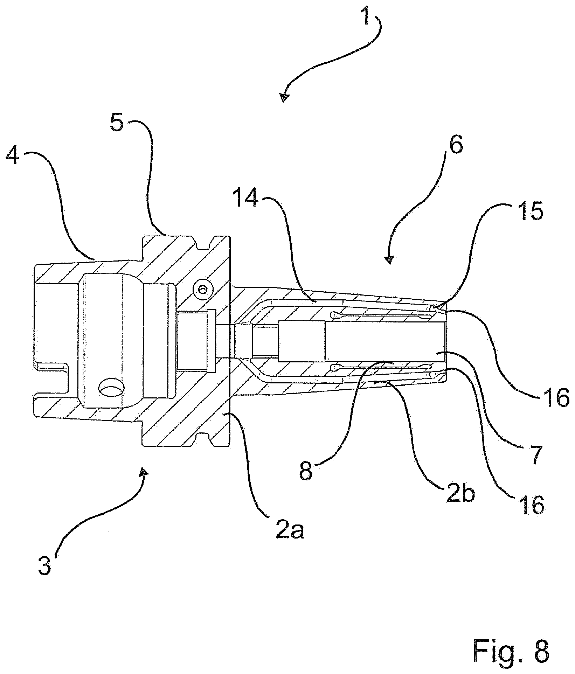

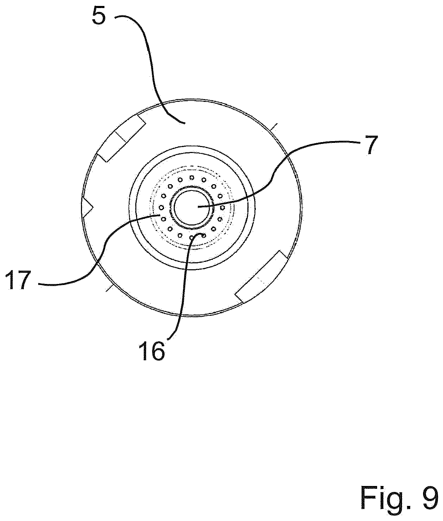

Die Figuren 1 bis 9 zeigen vier Ausführungsformen einer Spanneinrichtung zum Fixieren eines Werkzeugs in einer Werkzeugmaschine gemäß der vorliegenden Erfindung.

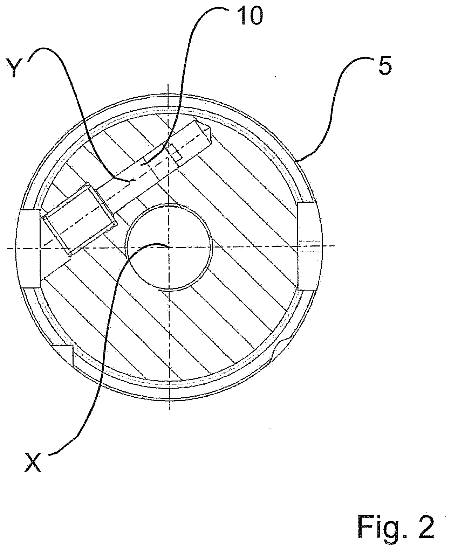

Die Figuren 1 und 2 zeigen eine erste Ausführungsform einer Spanneinrichtung 1 zum Fixieren eines Werkzeuges in einer Werkzeugmaschine. Die Spanneinrichtung 1 umfasst einen Grundkörper 2, der aus einer 16MnCrS5-Stahllegierung besteht und eine Spannachse X definiert.

Insgesamt besitzt der Grundkörper 2 eine normierte Außenkontur eines Warmschrumpffutters nach DIN 69882-8. Die Außenkontur des Grundkörpers 2 kann aber auch identisch mit anderen normierten oder proprietären Warmschrumpffuttern ausgebildet sein.

Der Grundkörper 2 weist eine Maschinenschnittstelle 3 auf, die in einem hinteren axialen Endbereich des Grundkörpers 2 ausgebildet ist. Die Maschinenschnittstelle 3 umfasst einen Befestigungskonus 4 und einen Ringflansch 5 und ist als Hohlschaftkegel (HSK) nach DIN 69893-1 normiert, wie es von der DIN 69882-8 vorgeschrieben ist. Die konkrete Form der Maschinenschnittstelle 3 kann allerdings abweichen und richtet sich jeweils nach der verwendeten Werkzeugmaschine und kann beispielsweise auch als Steilkegel (SK) oder dergleichen vorgesehen sein.

Weiterhin umfasst der Grundkörper 2 einen Spannbereich 6, der in dem der Maschinenschnittstelle 3 gegenüberliegenden vorderen axialen Endbereich des Grundkörpers 2 ausgebildet ist. Der Spannbereich 6 definiert eine Aufnahme 7 für den Werkzeugschaft. Diese wird unter Bildung einer dünnen Wandung 8 von einer Druckkammer 9 ringförmig umgeben, die mit einem Hydraulikmittel gefüllt ist. Dabei kann die zwischen der Aufnahme 7 und der Druckkammer 9 gebildete dünne Wandung 8 durch eine Erhöhung des Drucks in der Druckkammer 9 elastisch nach innen verformt werden, um einen in die Aufnahme 7 eingesetzten Werkzeugschaft kraftschlüssig zu fixieren.

Der Grundkörper 2 weist ferner eine Innenkontur auf, um dem Werkzeug ein Schmiermittel zur Minimalmengenschmierung (MMS) zuzuführen. Dazu wird durch die Innenkontur eine Kühlschmiermittelzuleitung definiert, die sich ausgehend von einer Öffnung im Bereich der Maschinenschnittstelle 3 durch den Grundkörper 2 bis zur Aufnahme 7 erstreckt und durch die dem Werkzeug maschinenseitig ein Kühlschmiermittel zugeleitet werden kann. Die Innenkontur des Grundkörpers 2 ist vorliegend gemäß DIN 69090 ausgebildet, kann aber auch je nach Werkzeugmaschine abweichen. Beispielsweise lässt sie sich alternativ nach einer Werknorm ausbilden, um auch in einer entsprechend normierten Werkzeugmaschine die Verwendung der Minimalmengenschmierung zu gewährleisten.

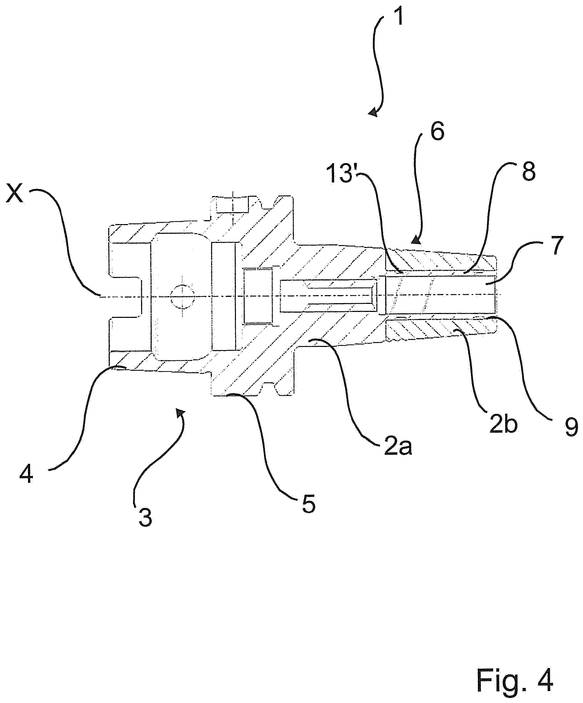

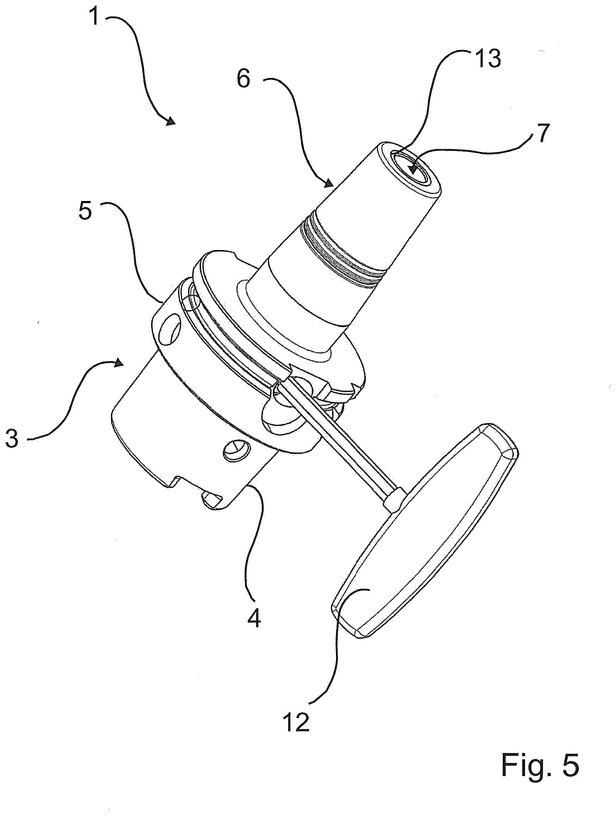

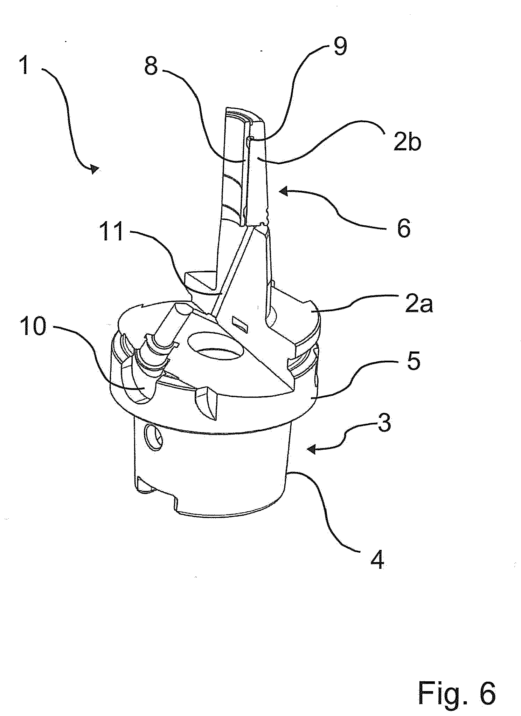

In dem Ringflansch 5 der Maschinenschnittstelle 3 ist als Spannmittel eine Spannschraube 10 vorgesehen, die ausgebildet ist, um wahlweise eine Druckerhöhung in der Druckkammer 9 zu bewirken. Die Spannschraube 10 ist über einen Hydraulikmittelzuführkanal 11 wie in der Figur 6 erkennbar mit der Druckkammer 9 wirkverbunden und ausgebildet, um das Hydraulikmittel mit einer Druckkraft zu beaufschlagen. Aus der Figur 4 ist ersichtlich, dass die Betätigungsrichtung Y der Spannschraube 10 sich quer zu der Spannachse X erstreckt und die Spannschraube 10 durch eine äußere Umfangsfläche des Ringflanschs 5 zugänglich ist. Folglich lässt sich die Spannschraube 10 mit einem Betätigungsschlüssel 12 manuell, wie in Figur 5 dargestellt ist, betätigen.

Zum Fixieren oder Entnehmen eines Werkzeugs aus der Spanneinrichtung 1 muss zunächst eine eventuell bestehende elastische Verformung der dünnen Wandung 8 zurückgeführt werden. Dazu wird die Spannschraube 10 mit dem Betätigungsschlüssel 12 rotierend derart in der Betätigungsrichtung Y bewegt, dass Hydraulikmittel aus der Druckkammer 9 durch den Hydraulikmittelzuführkanal 11 entweichen kann, so dass sich das Hydraulikmittel in der Druckkammer 9 entspannt. In dem entspannten Zustand lässt sich ein zuvor gespanntes Werkzeug aus der Aufnahme 7 der Spanneinrichtung 1 entnehmen und/oder ein neues Werkzeug in die Aufnahme 7 der Spanneinrichtung 1 einsetzen. Ein neu in die Aufnahme 7 der Spanneinrichtung 1 eingesetztes Werkzeug wird fixiert, indem die Spannschraube 10 mit dem Betätigungsschlüssel 12 entgegengesetzt rotierend in der Betätigungsrichtung Y derart bewegt wird, dass das Hydraulikmittel unter Erhöhung des auf die Wandung 8 wirkenden Drucks durch den Hydraulikmittelzuführkanal 11 in die Drucckammer 9 gepresst wird. Dies führt entsprechend zu einer elastischen Verformung der dünnen Wandung 8, so dass diese den eingesetzten Werkzeugschaft schließlich kraftschlüssig in der Aufnahme 7 der Spanneinrichtung 1 festlegt.

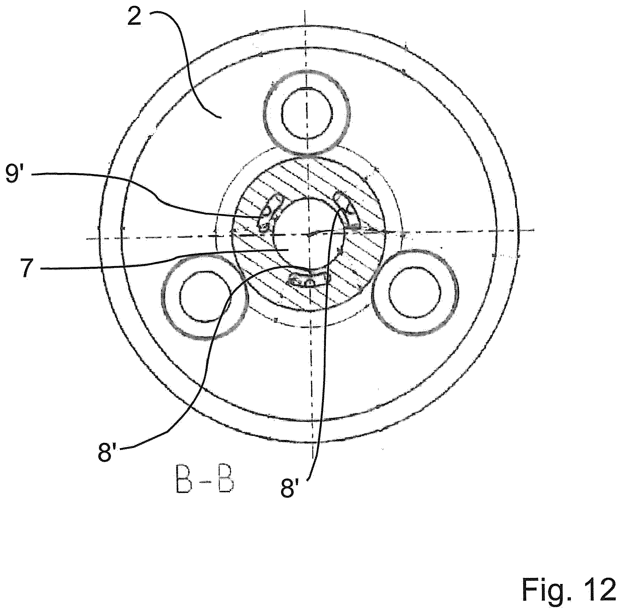

Bei einer alternativen Ausführungsform, welche in der Figur 12 dargestellt ist, sind alternativ zu der ringförmigen Druckkammer 9 mehrere, nämlich hier insgesamt drei Druckkammern 9' vorgesehen, welche die Aufnahme 7 umgeben. Die Druckkammern 9' sind mit einem Winkelversatz von 120° in dem Grundkörper 2 ausgebildet und erstrecken sich jeweils um einen Umfangsbereich von etwa 50°. Sie können mit einem Hydraulikmittel beaufschlagt werden, um die Wandungsabschnitte 8' zwischen der zentralen Aufnahme 7 und den Druckkammern 9' elastisch nach innen zu verformen und so ein in die Aufnahme 7 eingesetztes Bauteil kraftschlüssig zu fixieren. Hierzu sind die zwischen der Aufnahme 7 und den Druckkammern 9' gelegenen Wandungsabschnitte 8' entsprechend dünn und elastisch ausgebildet. Zur Druckbeaufschlagung sind die Druckkammern 9' über nicht dargestellte Verbindungskanäle miteinander verbunden und stehen über eine im Grundköper 2 ausgebildete Hydraulikmitteleitung mit einer zentralen Hydraulikmittelquelle in Verbindung. Das gesamte System mit den Druckkammern 9', den Verbindungskanälen und der Hydraulikmittelleitung sind in an sich bekannter Weise mit einem Hydraulikmittel wie beispielsweise Öl befüllt.

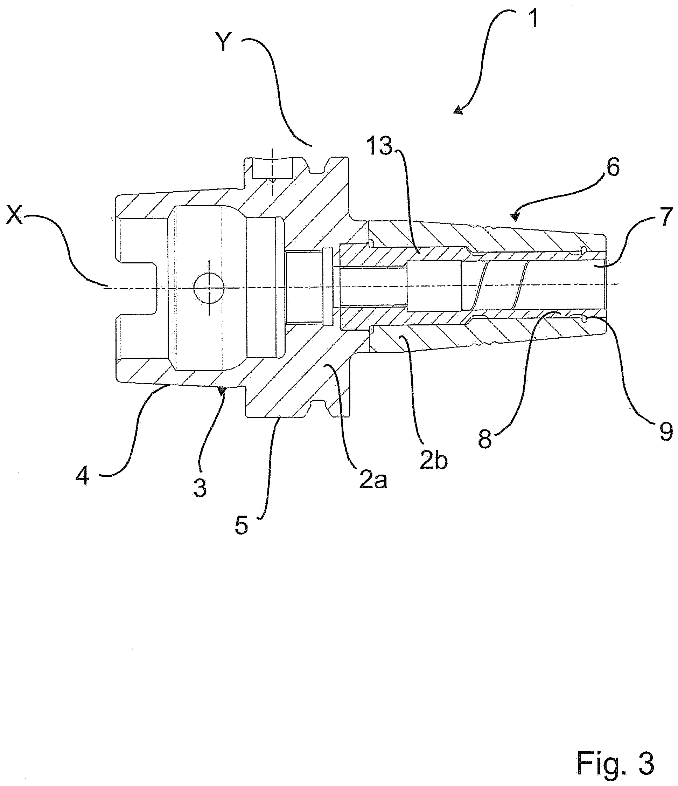

Die Figur 3 zeigt eine zweite Ausführungsform einer Spanneinrichtung 1 zum Fixieren eines Werkzeugs in einer Werkzeugmaschine gemäß der vorliegenden Erfindung. Im Unterschied zu der in Figur 1 dargestellten ersten Ausführungsform ist der Grundkörper 2 hier nicht einteilig ausgebildet, sondern axial unterteilt und umfasst einen hinteren Grundkörperabschnitt 2a, der die Maschinenschnittstelle 3 definiert, und einen vorderen Grundkörperabschnitt 2b, der den Spannbereich 6 definiert. Die beiden Grundkörperabschnitte 2a, 2b sind axial benachbart zueinander angeordnet und mittels Hochtemperaturlöten miteinander verbunden.

Der Spannbereich 6 umfasst eine Dehnbüchse 13 mit einer dünnen Wandung 8, die unter Bildung der Druckkammer 9 in den Grundkörper 2 eingesetzt ist. Konkret ist die Dehnbüchse 13 in den hinteren Grundkörperabschnitt 2a eingesetzt, und sie erstreckt sich durch den vorderen Grundkörperabschnitt 2b bis zu der vorderen Stirnfläche der Spanneinrichtung 1. Die Dehnbüchse 13 ist an ihren axialen Endbereichen mit dem hinteren Grundkörperabschnitt 2a und dem vorderen Grundkörperabschnitt 2b mittels Hochtemperaturlöten verbunden.

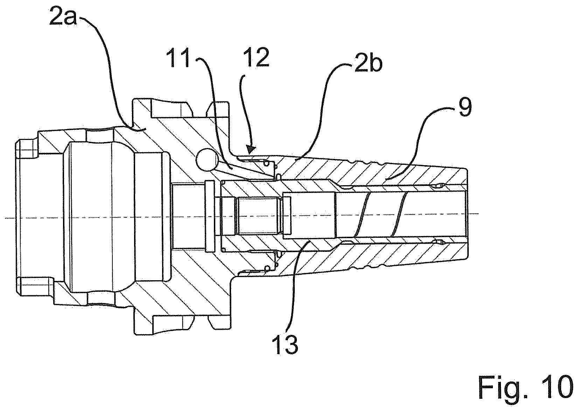

Die Figur 10 zeigt eine Alternative, bei welcher die beiden Grundkörperabschnitte 2a, 2b nicht nur durch Hochtemperaturlöten miteinander verbunden, sondern zusätzlich verschraubt sind. Konkret ist der vordere Grundkörperabschnitt 2b auf den hinteren Grundkörperabschnitt 2a aufgeschraubt. Hierzu sind die Grundkörperabschnitte 2a, 2b mit entsprechenden Gewinden versehen, wie durch einen Pfeil 12 in der Figur 10 angedeutet ist.

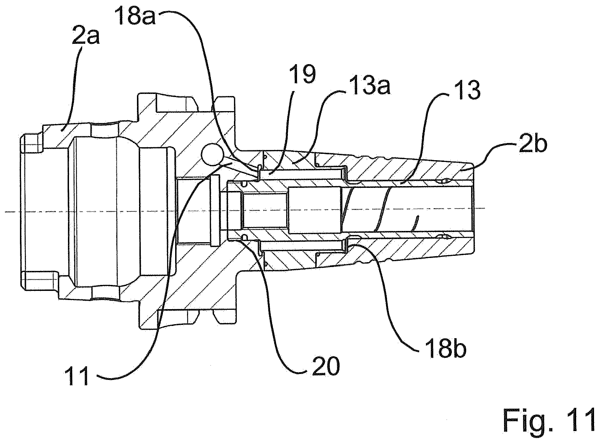

Eine weitere Alternative ist in Figur 11 gezeigt. Hier ist der hintere Endabschnitt der Dehnbüchse 13 mit dem hinteren Grundkörperabschnitt 2a nicht nur durch Hochtemperaturlöten verbunden, sondern zusätzlich in den hinteren Grundkörperabschnitt 2a eingeschraubt, wie durch die Bezugsziffer 20 angedeutet ist. Desweiteren weist die Dehnbüchse 13 einen radial nach au-ßen vorstehenden Ringflansch 13a auf, der axial zwischen den beiden Grundkörperabschnitten 2a, 2b positioniert ist. Dabei sind die Grundkörperabschnitte 2a, 2b mit der Dehnbüchse 13 im Bereich des Ringflansches 13a durch Hochtemperaturlöten verbunden. Hier bildet der Ringflansch 13a einen Abstandhalter zwischen den beiden Grundkörperabschnitten 2a, 2b, über welchen die Länge der Spanneinrichtung eingestellt werden kann.

Zwischen den einander gegenüberliegenden Stirnflächen des hinteren Grundkörperabschnitts 2a und des Ringflansche 13a einerseits und des Ringflansches 13a und des vorderen Grundkörperabschnitts 2b andererseits sind ringförmige Fluidkammern 18a, 18b ausgebildet, die miteinander über Verbindungsbohrungen 19, die sich axial durch den Ringflansch 13a erstrecken, in Fluidverbindung stehen. Die zwischen dem vorderen Grundkörperabschnitt 2b und dem Ringflansch 13a gebildete vordere ringförmige Fluidkammer 18b ist wiederrum mit der Druckkammer 9 fluidverbunden. Im Ergebnis erfolgt über die hintere Fluidkammer 18a, die Verbindungskanäle 19 und die vordere Fluidkammer 18b eine Druckübertragung von der Spannschraube 10 an die Druckkammern 9.

Die Figur 4 zeigt eine dritte Ausführungsform einer Spanneinrichtung zum Fixieren eines Werkzeugs in einer Werkzeugmaschine gemäß der vorliegenden Erfindung. Im Unterschied zu der in der Figur 2 dargestellten zweiten Ausführungsform ist die ringförmige dünne Wandung 8 einteilig mit dem hinteren Grundkörperabschnitt 2a ausgebildet und ragt von dessen vorderer Stirnfläche nach vorn ab. Der vordere Grundkörperabschnitt 2b ist unter Bildung der Druckkammer 9 auf die dünne Wandung 8 aufgeschoben und mit dieser durch Hochtemperaturlöten verbunden.

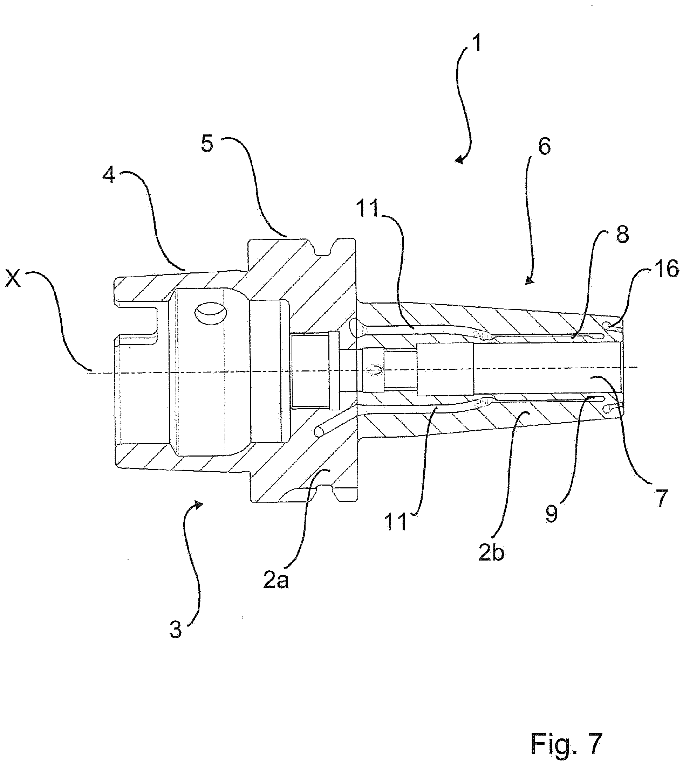

Die Figuren 7 bis 9 zeigen eine vierte Ausführungsform einer Spanneinrichtung zum Fixieren eines Werkzeugs in einer Werkzeugmaschine. Anders als bei den in den Figuren 1 bis 3 dargestellten ersten bis dritten Ausführungsformen ist der Spannbereich 6 mittels eines generativen Herstellungsverfahrens wie beispielsweise 3D-Druck gefertigt und an die Maschinenschnittstelle 3 angeformt. Ferner sind in dem Spannbereich 6 Kühlschmiermittelkanäle 14 ausgebildet, die sich ausgehend von der in dem Grundkörper 2 vorgesehenen Kühlschmiermittelzuleitung zu einem Kühlschmiermittelsammelraum 15 erstrecken, der die Aufnahme 7 an deren vorderem axialen Ende ringförmig umgibt. Der Kühlschmiermittelsammelraum 15 ist mit mehreren Kühlschmiermitteldüsen 16 fluidverbunden, die in der Stirnfläche 17 kreisförmig um die Aufnahme 7 herum angeordnet und derart ausgebildet sind, dass ein in die Aufnahme 7 eingesetztes Werkzeug umfänglich mit einem Kühlschmiermittel bestrahlt werden kann. Diese Ausführungsform erlaubt daher eine Kühlschmierung auch solcher Werkzeuge, die nicht eigens für Kühlschmierung ausgelegt sind, insbesondere keine MMS-Kanäle aufweisen.

Ein Vorteil der erfindungsgemäßen Spanneinrichtung 1 besteht darin, dass sie ein Warmschrumpffutter infolge einer identischen Außenkontur ohne weiteres ersetzen kann. Insbesondere kann sie zusammen mit existierenden auf dem Warmschrumpffutter basierenden CNC-Programmen verwendet werden, ohne dass erneute Kollisionsuntersuchungen durchgeführt werden müssen. Durch die Anwendung der Hydro-Dehnspanntechnik auf den Spannbereich 3 werden bekannte Nachteile von Warmschrumpffuttern vermieden. So kann die Rüstzeit bei einem manuellen oder automatischen Werkzeugwechsel erheblich verkürzt und die kostspielige Arbeitsspindel der Werkzeugmaschine aufgrund einer besseren Dämpfung effektiv geschützt werden.

### Bezugszeichenliste

- 1: Spanneinrichtung
- 2: Grundkörper
- 2a: vorderer Grundkörperabschnitt
- 2b: hinterer Grundkörperabschnitt
- 3: Maschinenschnittstelle
- 4: Befestigungskonus
- 5: Ringflansch
- 6: Spannbereich
- 7: Aufnahme
- 8, 8': dünne Wandung
- 9, 9`: Druckkammer
- 10: Spannmittel
- 11: Hydraulikmittelzuführkanal
- 12: Gewinde
- 13, 13': Dehnbüchse
- 13a: Ringflansch
- 14: Kühlschmiermittelkanal
- 15: Kühlschmiermittelsammelraum
- 16: Kühlschmiermitteldüse
- 17: Stirnfläche
- 18a, 18b: ringförmige Fluidkammern
- 19: Verbindungsbohrung
- 20: Pfeil
- 21: Gewinde
- X: Spannachse
- Y: Betätigungsrichtung

## Patentansprüche

1. Spanneinrichtung (1) zum Fixieren eines Werkzeugs in einer Werkzeugmaschine, mit einem eine Spannachse (X) definierenden Grundkörper (2), der eine Maschinenschnittstelle (3), die einen Befestigungskonus (4) und einen Ringflansch (5) aufweist und in dem hinteren axialen Endbereich des Grundkörpers (2) ausgebildet ist, und einen Spannbereich (6), der eine Aufnahme (7) für einen Werkzeugschaft definiert und an dem der Maschinenschnittstelle (3) gegenüber liegenden vorderen axialen Endbereich des Grundkörpers (2) ausgebildet ist, umfasst, wobei der Grundkörper (2) eine Außenkontur besitzt, die entsprechend der eines Warmschrumpffutters und normiert nach DIN 69882-8 ausgebildet ist, **dadurch gekennzeichnet,**
- **dass** die Aufnahme (7) von einer mit einem Hydraulikmittel beaufschlagbaren Druckkammer (9) ringförmig umgeben ist, wobei zwischen der Aufnahme (7) und der Druckkammer (9) eine dünne Wandung (8) vorgesehen ist, die durch eine Erhöhung des Drucks in der Druckkammer (9) elastisch nach innen verformbar ist, um einen in die Aufnahme (7) eingesetzten Werkzeugschaft kraftschlüssig zu fixieren oder
- **dass** die Aufnahme (7) von mehreren hydraulisch beaufschlagbaren Druckkammern (9') umgeben ist, die gleichmäßig verteilt entlang des Umfangs der Aufnahme (7) angeordnet und insbesondere konzentrisch zur Spannachse (X) ausgebildet sind, wobei zwischen den Druckkammern (9') und der Aufnahme (7) dünne Wandungsabschnitte (8') verbleiben, die durch eine Erhöhung des Drucks in den Druckkammern (9') elastisch nach innen verformbar sind, um einen in die Aufnahme (7) eingesetzten Werkzeugschaft kraftschlüssig zu fixieren.

2. Spanneinrichtung nach einem Ansprüche 1, **dadurch gekennzeichnet, dass** in dem Ringflansch (5) der Maschinenschnittstelle (3) Spannmittel (10) vorgesehen sind, die ausgebildet sind, um bei Betätigung ein Hydraulikmittel in die Druckkammer (9)/die Druckkammern (9') zu pressen und so eine Druckerhöhung in der Druckkammer (9)/den Druckkammern (9') zu bewirken, wobei bevorzugt das Spannmittel (10) über einen Hydraulikmittelzuführkanal (11) mit der Druckkammer (9) wirkverbunden ist.

3. Spanneinrichtung nach Anspruch 2, **dadurch gekennzeichnet, dass** das Spannmittel eine Spannschraube (10) umfasst, die ausgebildet ist, um Hydraulikmittel in die Druckkammer (9)/die Druckkammern (9') zu pressen, wobei insbesondere die Betätigungsrichtung (Y) der Spannschraube (10) sich quer zu der Spannachse (X) erstreckt und die Spannschraube (10) durch eine äußere Umfangsfläche des Ringflansches (5) zugänglich ist.

4. Spanneinrichtung nach einem der Ansprüche 1 bis 3, **dadurch gekennzeichnet, dass** der Grundkörper (2) wenigstens zwei axial benachbarte Grundkörperabschnitte (2a, 2b) umfasst, von denen ein hinterer Grundkörperabschnitt (2a) die Maschinenschnittstelle (3) und ein vorderer Grundkörperabschnitt (2b) wenigstens einen Teil des Spannbereichs (6) definiert, wobei die Grundkörperabschnitte (2a, 2b) direkt oder indirekt miteinander verbunden sind.

5. Spanneinrichtung nach Anspruch 4, **dadurch gekennzeichnet, dass** eine die dünne Wandung (8)/die dünnen Wandungsabschnitte (8') definierende Dehnbüchse (13) an dem hinteren Grundkörperabschnitt (2a) ausgebildet, insbesondere mittels eines additiven Herstellungsverfahrens angeformt ist und von diesem nach vorne abragt, wobei die Dehnbüchse (13') den vorderen Grundkörperabschnitt (2b) unter Bildung der Druckkammern (9)/der Druckkammern (9') durchsetzt, oder
dass der Spannbereich (6) eine die dünne Wandung (8)/die dünnen Wandungsabschnitte (8') definierende Dehnbüchse (13) umfasst, deren hinteren Endabschnitt in den hinteren Grundkörperabschnitt (2a) eingesetzt und mit diesem verbunden ist und deren vorderer Endabschnitt von dem hinteren Grundkörperabschnitt (2a) nach vorne abragt, wobei die Dehnbüchse (13') den vorderen Grundkörperabschnitt (2b) unter Bildung der Druckkammer (9)/der Druckkammer (9') durchsetzt, wobei bevorzugt der hintere Endabschnitt der Dehnbüchse (13) mit dem hinteren Grundkörperabschnitt (2a) mittels Löten und/oder Schweißen, insbesondere durch Hochtemperaturlöten verbunden ist, wobei der hintere Endabschnitt der Dehnbüchse (13) insbesondere zusätzlich in den hinteren Grundkörperabschnitt (2a) eingeschraubt ist.

6. Spanneinrichtung nach Anspruch 5, **dadurch gekennzeichnet, dass** die Dehnbüchse (13, 13') mit dem vorderen Grundkörperabschnitt (2b) mittels Löten und/oder Schweißen, insbesondere durch Hochtemperaturlöten verbunden ist und/oder
dass die Grundkörperabschnitte (2a, 2b) mittels Löten und/oder Schweißen, insbesondere durch Hochtemperaturlöten direkt miteinander verbunden sind, wobei der vordere Grundkörperabschnitt (2b) vorzugsweise zusätzlich auf den hinteren Grundkörperabschnitt (2a) aufgeschraubt ist.

7. Spanneinrichtung nach Anspruch 5 oder 6, **dadurch gekennzeichnet, dass** die Dehnbüchse (13, 13') einen radial nach außen vorstehenden Ringflansch (13a) aufweist, der axial zwischen den beiden Grundkörperabschnitten (2a, 2b) positioniert ist, wobei die Grundkörperabschnitte (2a, 2b) mit der Dehnbüchse (13, 13') im Bereich des Ringflansches (13a) mittels Löten und/oder Schweißen, insbesondere durch Hochtemperaturlöten verbunden sind.

8. Spanneinrichtung nach Anspruch 7, **dadurch gekennzeichnet, dass** zwischen einander gegenüberliegenden Stirnflächen des hinteren Grundkörperabschnitts (2a) und des Ringflansches (13a) einerseits und des Ringflansches (13a) und des vorderen Grundkörperabschnitts (2b) andererseits ringförmige Fluidkammern (18a, 18b) gebildet werden, die miteinander über Verbindungsbohrungen (19) in dem Ringflansch (13a) in Fluidverbindung stehen, und dass die zwischen dem vorderen Grundkörperabschnitt (2b) und dem Ringflansch (13a) gebildete vordere ringförmige Fluidkammer (18b) mit der Druckkammer (9)/den Druckkammern (9') fluidverbunden ist.

9. Spanneinrichtung nach einem der Ansprüche 1 bis 4, **dadurch gekennzeichnet, dass** der Spannbereich (6) eine die dünne Wandung (8)/die dünnen Wandungsabschnitte (8') definierende Dehnbüchse (13) umfasst, die axial in den Grundkörper (2) eingesetzt und mit diesem verbunden ist, wobei bevorzugt die Dehnbüchse (13) in den Grundkörper (2) von dessen Vorderseite her unter Bildung der Druckkammern (9)/ der Druckkammern (9') eingesetzt ist, wobei die Dehnbüchse (13) mit dem Grundkörper (2) insbesondere verlötet, bevorzugt durch Hochtemperaturlöten verbunden ist.

10. Spanneinrichtung nach einem der vorhergehenden Ansprüche, **dadurch gekennzeichnet, dass** der Grundkörper (2) aus einer Stahllegierung, insbesondere einem Einsatzstahl besteht, und/oder
dass der Grundkörper (2) eine Innenkontur aufweist, die ausgebildet ist, um dem Werkzeug ein Schmiermittel zur Minimalmengenschmierung (MMS) zuzuführen, wobei die Innenkontur nach DIN 69090 oder nach einer Werknorm normiert ausgebildet ist.

11. Spanneinrichtung nach einem der Ansprüche 1 bis 10, **dadurch gekennzeichnet, dass** in dem Spannbereich (6) Kühlschmiermittelkanäle (14) ausgebildet sind, die sich ausgehend von einer in dem Grundkörper (2) vorgesehenen Kühlschmiermittelzuleitung zu einem Kühlschmiermittelsammelraum (15) erstrecken, der die Aufnahme (7) an deren vorderem axialen Ende ringförmig umgibt, wobei der Kühlschmiermittelsammelraum (15) mit mehreren Kühlschmiermitteldüsen (16) fluidverbunden ist, die in der Stirnfläche (17) kreisförmig um die Aufnahme (7) herum angeordnet und derart ausgebildet sind, dass ein in die Aufnahme (7) eingesetztes Werkzeug umfänglich mit einem Kühlschmiermittel bestrahlt werden kann.

12. Spanneinrichtung nach einem der vorherigen Ansprüche, **dadurch gekennzeichnet, dass** insgesamt drei Druckkammern (9') mit einem Versatz von 120° in Umfangsrichtung vorgesehen sind.

13. Spanneinrichtung nach Anspruch 12, **dadurch gekennzeichnet, dass** die Druckkammern (9') sich jeweils über einen Umfangsbereich von 30° bis 60°, insbesondere von 50° erstrecken.

14. Verfahren zum Herstellen einer Spanneinrichtung nach einem der Ansprüche 1 bis 3, **dadurch gekennzeichnet, dass** der Grundkörper (2) mit der Druckkammer (9)/ den Druckkammern (9') einteilig durch ein generatives Herstellungsverfahren gefertigt wird.

## Claims

1. A clamping device (1) for fixing a tool in a machine tool, comprising a base body (2) defining a clamping axis (X), said base body (2) including a machine interface (3) having a mounting cone (4) and an annular flange (5) and being formed in the rear axial end portion of said base body (2), and a clamping portion (6) which defines a receptacle (7) for a tool shank and is formed in the front axial end region of the base body (2) opposite the machine interface (3), the base body (2) having an outer contour which corresponds to that of a heat-shrink chuck and is formed in a standardized manner in accordance with DIN 69882-8, **characterized**
- **in that** the receptacle (7) is annularly surrounded by a pressure chamber (9) which can be acted upon by a hydraulic medium, a thin wall (8) being provided between the receptacle (7) and the pressure chamber (9), which wall (8) can be elastically deformed inwards by increasing the pressure in the pressure chamber (9) in order to fix a tool shank inserted into the receptacle (7) in a force-fitting manner, or
- **in that** the holder (7) is surrounded by a plurality of pressure chambers (9') which can be acted upon hydraulically and are arranged uniformly distributed along the circumference of the holder (7) and, in particular, are designed concentrically with respect to the clamping axis (X), thin wall sections (8') remaining between the pressure chambers (9') and the holder (7), which wall sections (8') can be deformed elastically inwards by increasing the pressure in the pressure chambers (9') in order to fix a tool shank inserted into the holder (7) in a force-fitting manner.

2. Clamping device according to claim 1, **characterized in that** clamping means (10) are provided in the annular flange (5) of the machine interface (3), which are designed to press a hydraulic medium into the pressure chamber (9)/the pressure chambers (9') when actuated and thus to cause an increase in pressure in the pressure chamber (9)/the pressure chambers (9'), the clamping means (10) preferably being operatively connected to the pressure chamber (9) via a hydraulic medium supply channel (11).

3. Clamping device according to claim 2, **characterized in that** the clamping means comprises a clamping screw (10) which is designed to press hydraulic medium into the pressure chamber (9)/pressure chambers (9'), wherein in particular the actuating direction (Y) of the clamping screw (10) extends transversely to the clamping axis (X) and the clamping screw (10) is accessible through an outer circumferential surface of the annular flange (5).

4. Clamping device according to one of the claims 1 to 3, **characterized in that** the base body (2) comprises at least two axially adjacent base body sections (2a, 2b), of which a rear base body section (2a) defines the machine interface (3) and a front base body section (2b) defines at least part of the clamping portion (6), the base body sections (2a, 2b) being directly or indirectly connected to each other.

5. Clamping device according to claim 4, **characterized in that** an expansion sleeve (13) defining the thin wall (8)/the thin wall sections (8') is formed on the rear base body section (2a), in particular by means of an additive manufacturing process, and projects forwardly therefrom, the expansion sleeve (13') passing through the front base body section (2b) to form the pressure chamber (9)/the pressure chambers (9'), or
**in that** the clamping region (6) comprises an expansion sleeve (13) defining the thin wall (8)/the thin wall sections (8'), the rear end portion of which expansion sleeve (13) is inserted into and connected to the rear base body portion (2a) and the front end portion of which expansion sleeve (13) projects forwardly from the rear base body section (2a), wherein the expansion sleeve (13') passes through the front base body section (2b) forming the pressure chambers (9)/the pressure chamber (9'), wherein preferably the rear end portion of the expansion sleeve (13) is connected to the rear base body section (2a) by means of soldering and/or welding, in particular by high-temperature soldering, wherein the rear end portion of the expansion sleeve (13) is in particular additionally screwed into the rear base body portion (2a).

6. Clamping device according to claim 5, **characterized in that** the expansion sleeve (13, 13') is connected to the front base body section (2b) by means of soldering and/or welding, in particular by high-temperature soldering, and/or
**in that** the base body sections (2a, 2b) are directly connected to one another by means of soldering and/or welding, in particular by high-temperature soldering, the front base body section (2b) preferably being additionally screwed onto the rear base body section (2a).

7. Clamping device according to claim 5 or 6, **characterized in that** the expansion sleeve (13, 13') has a radially outwardly projecting annular flange (13a) which is positioned axially between the two base body sections (2a, 2b), the base body sections (2a, 2b) being connected to the expansion sleeve (13, 13') in the region of the annular flange (13a) by means of soldering and/or welding, in particular by high-temperature soldering.

8. Clamping device according to claim 7, **characterized in that** between opposite end faces of the rear base body section (2a) and the annular flange (13a) on the one hand and the annular flange (13a) and the front base body section (2b) on the other hand annular fluid chambers (18a, 18b) are formed which are in fluid communication with one another via connecting bores (19) in the annular flange (13a), and **in that** a front annular fluid chamber (18b) formed between the front main body section (2b) and the annular flange (13a) is fluidly connected to the pressure chamber (9)/chambers (9').

9. Clamping device according to one of the claims 1 to 4, **characterized in that** the clamping portion (6) comprises an expansion sleeve (13) defining the thin wall (8)/the thin wall sections (8'), which is axially inserted into the base body (2) and connected thereto, wherein the expansion sleeve (13) is preferably inserted into the base body (2) from the front side thereof, forming the pressure chamber (9)/the pressure chambers (9'), wherein the expansion sleeve (13) is connected to the base body (2), in particular by soldering, preferably by high-temperature soldering.

10. Tensioning device according to one of the preceding claims, **characterized in that** the base body (2) consists of a steel alloy, in particular a case-hardened steel, and/or
**in that** the base body (2) has an inner contour which is designed to supply the tool with a lubricant for minimum quantity lubrication (MQL), the inner contour being designed to be standardized in accordance with DIN 69090 or in accordance with a works standard.

11. Clamping device according to one of the claims 1 to 10, **characterized in that** cooling lubricant channels (14) are formed in the clamping area (6), which extend from a cooling lubricant supply line provided in the base body (2) to a cooling lubricant collecting chamber (15), which annularly surrounds the receptacle (7) at its front axial end, wherein the cooling lubricant collecting chamber (15) is fluid-connected to a plurality of cooling lubricant nozzles (16) which are arranged in the end face (17) in a circular manner around the receptacle (7) and are designed in such a way that a tool inserted into the receptacle (7) can be circumferentially treated with a cooling lubricant.

12. Clamping device according to one of the previous claims, **characterized in that** a total of three pressure chambers (9') are provided with an offset of 120° in the circumferential direction.

13. Clamping device according to claim 12, **characterized in that** the pressure chambers (9') each extend over a circumferential range of 30° to 60°, in particular of 50°.

14. Method for manufacturing a clamping device according to one of claims 1 to 3, **characterized in that** the base body (2) is manufactured integrally with the pressure chamber (9)/chambers (9') by a generative manufacturing process.

## Revendications

1. Dispositif de serrage (1) pour la fixation d'un outil dans une machine-outil, avec un corps de base (2) définissant un axe de serrage (X), qui comprend une interface machine (3), qui présente un cône de fixation (4) et une bride annulaire (5) et qui est formée dans la zone d'extrémité axiale arrière du corps de base (2), et une zone de serrage (6), qui définit un logement (7) pour une tige d'outil et qui est formée dans la zone d'extrémité axiale avant du corps de base (2) opposée à l'interface machine (3), le corps de base (2) possédant un contour extérieur qui est formé conformément à celui d'un mandrin de frettage à chaud et normalisé selon la norme DIN 69882-8, **caractérisée,**
- **en ce que** le logement (7) est entouré en forme d'anneau par une chambre de pression (9) pouvant être alimentée par un fluide hydraulique, une paroi mince (8) étant prévue entre le logement (7) et la chambre de pression (9), òu laquelle paroi peut être déformée élastiquement vers l'intérieur par une augmentation de la pression dans la chambre de pression (9), afin de fixer par adhérence une tige d'outil insérée dans le logement (7) ou
- **en ce que** le logement (7) est entouré de plusieurs chambres de pression (9') pouvant être sollicitées hydrauliquement, qui sont réparties régulièrement le long de la périphérie du logement (7) et sont réalisées en particulier de manière concentrique par rapport à l'axe de serrage (X), des sections de paroi minces (8') subsistant entre les chambres de pression (9') et le logement (7), qui peuvent être déformées élastiquement vers l'intérieur par une augmentation de la pression dans les chambres de pression (9'), afin de fixer par adhérence une tige d'outil insérée dans le logement (7).

2. Dispositif de serrage selon l'une des revendications 1, **caractérisé en ce que** des moyens de serrage (10) sont prévus dans la bride annulaire (5) de l'interface machine (3), lesquels sont conçus pour presser un fluide hydraulique dans la chambre de pression (9)/les chambres de pression (9') lors de l'actionnement et provoquer ainsi une augmentation de la pression dans la chambre de pression (9)/les chambres de pression (9'), le moyen de serrage (10) étant de préférence relié fonctionnellement à la chambre de pression (9) par un canal d'alimentation en fluide hydraulique (11).

3. Dispositif de serrage selon la revendication 2, **caractérisé en ce que** le moyen de serrage comprend une vis de serrage (10) qui est conçue pour presser le fluide hydraulique dans la chambre de pression (9) / les chambres de pression (9'), la direction d'actionnement (Y) de la vis de serrage (10) s'étendant en particulier transversalement à l'axe de serrage (X) et la vis de serrage (10) étant accessible par une surface périphérique extérieure de la bride annulaire (5).

4. Dispositif de serrage selon l'une des revendications 1 à 3, **caractérisé en ce que** le corps de base (2) comprend au moins deux sections de corps de base (2a, 2b) axialement adjacentes, dont une section de corps de base arrière (2a) définit l'interface machine (3) et une section de corps de base avant (2b) définit au moins une partie de la zone de serrage (6), les sections de corps de base (2a, 2b) étant reliées directement ou indirectement entre elles.

5. Dispositif de serrage selon la revendication 4, **caractérisé en ce qu'une** douille de dilatation (13) définissant la paroi mince (8)/les sections de paroi mince (8') est réalisée sur la section de corps de base arrière (2a), en particulier formée au moyen d'un procédé de fabrication additif, et dépasse de celle-ci vers l'avant, la douille de dilatation (13') traversant la section de corps de base avant (2b) en formant les chambres de pression (9)/les chambres de pression (9'), ou
**en ce que** la zone de serrage (6) comprend une douille de dilatation (13) définissant la paroi mince (8)/les parties de paroi mince (8'), dont la partie d'extrémité arrière est insérée dans la partie de corps de base arrière (2a) et reliée à celle-ci et dont la partie d'extrémité avant fait saillie vers l'avant de la partie de corps de base arrière (2a), la douille de dilatation (13') traversant la partie avant du corps de base (2b) en formant la chambre de pression (9)/les chambres de pression (9'), la partie d'extrémité arrière de la douille de dilatation (13) étant de préférence reliée à la partie arrière du corps de base (2a) par brasage et/ou soudage, en particulier par brasage à haute température, la partie d'extrémité arrière de la douille de dilatation (13) étant en particulier vissée en plus dans la partie arrière du corps de base (2a).

6. Dispositif de serrage selon la revendication 5, **caractérisé en ce que** la douille de dilatation (13, 13') est reliée à la section de corps de base avant (2b) par brasage et/ou soudage, en particulier par brasage à haute température, et/ou **en ce que** la douille de dilatation (13, 13') est reliée à la section de corps de base arrière (2b) par brasage à haute température et/ou
que les sections de corps de base (2a, 2b) sont reliées directement entre elles par brasage et/ou soudage, en particulier par brasage à haute température, la section de corps de base avant (2b) étant de préférence vissée en plus sur la section de corps de base arrière (2a).

7. Dispositif de serrage selon la revendication 5 ou 6, **caractérisé en ce que** la douille de dilatation (13, 13') présente une bride annulaire (13a) faisant saillie radialement vers l'extérieur, qui est positionnée axialement entre les deux sections de corps de base (2a, 2b), les sections de corps de base (2a, 2b) étant reliées à la douille de dilatation (13, 13') dans la zone de la bride annulaire (13a) par brasage et/ou soudage, notamment par brasage à haute température.

8. Dispositif de serrage selon la revendication 7, **caractérisé en ce qu'entre** des surfaces frontales opposées l'une à l'autre de la section de corps de base arrière (2a) et de la bride annulaire (13a) d'une part et de la bride annulaire (13a) et de la section de corps de base avant (2b) d'autre part, des chambres à fluide annulaires (18a, 18b) sont formées, qui sont en communication fluidique l'une avec l'autre par l'intermédiaire d'alésages de liaison (19) dans la bride annulaire (13a), et **en ce que** la chambre fluidique annulaire avant (18b) formée entre la partie de corps de base avant (2b) et la bride annulaire (13a) est en communication fluidique avec la chambre de pression (9)/les chambres de pression (9').

9. Dispositif de serrage selon l'une des revendications 1 à 4, **caractérisé en ce que** la zone de serrage (6) comprend une douille d'expansion (13) définissant la paroi mince (8)/les sections de paroi mince (8'), qui est insérée axialement dans le corps de base (2) et reliée à celui-ci, de préférence la douille de dilatation (13) étant insérée dans le corps de base (2) à partir de sa face avant en formant les chambres de pression (9)/les chambres de pression (9'), la douille de dilatation (13) étant reliée au corps de base (2) en particulier par brasage, de préférence par brasage à haute température.

10. Dispositif de serrage selon l'une des revendications précédentes, **caractérisé en ce que** le corps de base (2) est constitué d'un alliage d'acier, en particulier d'un acier de cémentation, et/ou
**en ce que** le corps de base (2) présente un contour intérieur qui est conçu pour amener à l'outil un lubrifiant pour la lubrification par quantités minimales (MMS), le contour intérieur étant conçu de manière normalisée selon la norme DIN 69090 ou selon une norme d'usine.

11. Dispositif de serrage selon l'une des revendications 1 à 10, **caractérisé en ce que** des canaux de lubrifiant de refroidissement (14) sont formés dans la zone de serrage (6), lesquels s'étendent à partir d'une conduite d'alimentation en lubrifiant de refroidissement prévue dans le corps de base (2) jusqu'à un espace collecteur de lubrifiant de refroidissement (15) qui entoure de manière annulaire le logement (7) à son extrémité axiale avant, l'espace collecteur de réfrigérant lubrifiant (15) étant relié par fluide à plusieurs buses de réfrigérant lubrifiant (16) qui sont disposées dans la face frontale (17) en forme de cercle autour du logement (7) et qui sont conçues de telle sorte qu'un outil inséré dans le logement (7) peut être traité sur toute sa circonférence par un réfrigérant lubrifiant.

12. Dispositif de serrage selon l'une des revendications précédentes, ca**ractérisé en ce qu**'il est prévu au total trois chambres de pression (9') avec un décalage de 120° dans la direction circonférentielle.

13. Dispositif de serrage selon la revendication 12, **caractérisé en ce que** les chambres de pression (9') s'étendent chacune sur une plage périphérique de 30° à 60°, en particulier de 50°.

14. Procédé de fabrication d'un dispositif de serrage selon l'une des revendications 1 à 3, **caractérisé en ce que** le corps de base (2) est fabriqué d'une seule pièce avec la ou les chambres de pression (9') par un procédé de fabrication générative.
